# EUROPÄISCHE PATENTSCHRIFT

(11) **EP 0 915 299 B1**
(45) Veröffentlichungstag und Bekanntmachung des Hinweises auf die Patenterteilung: **02.01.2004**
(21) Anmeldenummer: 98118898.0
(22) Anmeldetag: 07.10.1998
(51) Int. Cl.: F24C 15/20, A47F 10/06

(54) **Speisenzubereitungseinheit**
Food preparation unit
Unité pour la préparation d'aliments

(30) Priorität: 09.10.1997 DE 19744661
(43) Veröffentlichungstag der Anmeldung: 12.05.1999
(73) Patentinhaber: Beck, Bernd, D-35794 Mengerskirchen (DE); Beck, Michael, D-35794 Mengerskirchen (DE); Beck, Volker, D-65549 Limburg (DE)
(72) Erfinder: Beck, Bernd, D-35794 Mengerskirchen (DE); Beck, Michael, D-35794 Mengerskirchen (DE); Beck, Volker, D-65549 Limburg (DE)
(74) Vertreter: Weber, Dieter, Dr.

(56) Entgegenhaltungen:
- DE-A- 2 815 771
- DE-A- 3 741 721
- DE-A- 4 410 884
- DE-A- 9 310 919
- DE-U- 8 804 511
- DE-U- 9 310 919
- FR-A- 2 619 198
- US-A- 3 981 232
- US-A- 4 971 223

## Beschreibung

Die vorliegende Erfindung betrifft eine Speisenzubereitungseinheit, bestehend aus einem Rahmen bzw. Gehäuse, mindestens einer Zubereitungseinrichtung für das Zubereiten von Speisen, einer Absaugeinrichtung mit einer Vakuumquelle, wie z.B. einem Sauggebläse, und einer Filtereinheit, wobei die Vakuumquelle der Absaugeinrichtung unter der Zubereitungseinrichtung in dem Gehäuse angeordnet ist.

Eine derartige Speisenzubereitungseinheit ist beispielsweise aus der deutschen Offenlegungsschrift Nr. 44 10 884 A1 bekannt geworden. Diese betrifft eine Grillvorrichtung mit einer Absaugvorrichtung, wobei sich ein einen Absaugschlitz definierendes Blech über den hinteren Teil der Grillvorrichtung erstreckt und von einem Sauggebläse angesaugte Grilldünste nach hinten und unten in das Gehäuse leitet. Zwischen dem Gehäuse und dem Absaugschlitz sind horizontal liegende Filterelemente angeordnet, die auf der Rückseite der Vorrichtung nach Öffnen einer Klappe schubladenartig herausgezogen werden können. Diese Vorrichtung ist nicht dafür ausgelegt, daß die Speisenzubereitungseinrichtung, konkret die Grillvorrichtung, schnell und leicht herausnehmbar oder austauschbar ist. Die Herausnahme der Filter ist insofern etwas umständlich, als sichergestellt sein muß, daß die Rückseite der Speisenzubereitungseinheit so weit frei ist, daß die in Bodennähe angelenkte Klappe geöffnet werden kann. Eine Austauschbarkeit oder Herausnehmbarkeit der Grillvorrichtung wird in dieser Druckschrift weder angesprochen, noch ergibt sie sich implizit aus den Darstellungen in dieser Druckschrift, weil das Umlenkblech für den Ansaugschlitz und auch die Bedienelemente ein Herausnehmen der Grillvorrichtung aus dem Gehäuse verhindern.

Generell sind Speisenzubereitungseinheiten der eingangs erwähnten Art auch aus der FR 2 619 198 und der DE 9310 919 U1 bekannt Auch die DE 28 15 771 zeigt eine Speisenzubereitungseinheit, bei welcher ein Gebläse unterhalb der Zubereitungseinrichtung angeordnet ist und einen Luftschleier erzeugen soll, der vor der Kocheinrichtung aufsteigt. Keine der vorgenannten Entgegenhaltungen spricht eine einfache Herausnehmbarkeit der Zubereitungseinrichtung an, noch sind darin Ausführungsformen dargestellt, aus denen sich eine leichte Herausnehmbarkeit und Austauschbarkeit der Speisenzubereitungseinrichtung ergeben würde.

In der DE 93 10 919 wird eine Warmspeisenausgabe beschrieben. Darin geht es in erster Linie um höhenverstellbare Heizplatten, auf welche warme Speisen enthaltende Behälter unterschiedlicher Höhe aufgesetzt werden können. in einer Ausführungsform sind die höhenverstellbaren Warmhalteplatten herausnehmbar, können an einem anderen Ort aufgeheizt werden und dann auf Schienen unterschiedlicher Höhe aufgesetzt werden. Im Zusammenhang mit einer weiteren Ausführungsform, bei welcher die Heizplatte über ein Scherengestell höhenverstellbar ist, wird außerdem darauf hingewiesen, daß die Heizplatte in der höchsten Stellung auch als Grill- und Speisenzubereitungseinrichtung verwendet werden kann.

Generell betrifft die vorliegende Erfindung Speisenzubereitungseinheiten, wie sie aus professionellen Küchen, aus Schnellimbiß-Restaurants oder auch von mobilen Verkaufsständen für frisch zubereitete Speisen bekannt sind. In vielen Fällen ist die Vakuumquelle in Form einer Absaugeinrichtung mit Gebläse oberhalb einer Zubereitungseinrichtung angeordnet, wobei diese Zubereitungseinrichtung zum Beispiel eine Pfanne, ein Grill, eine Pfanne oder Schale mit heißem Fritierfett, ein Wasserbad oder auch eine Herdplatte sein kann. Je nach dem vorhandenen Platz und insbesondere bei mobilen Verkaufstheken kann es jedoch zweckmäßig sein, die Vakuumquelle bzw. ein Sauggebläse unterhalb oder neben der Zubereitungseinrichtung anzuordnen und den über der Zubereitungseinrichtung entstehenden Kochdunst seitlich und unmittelbar am Rand der oberen Fläche der Zubereitungseinrichtung abzusaugen. Die vorliegende Erfindung geht vor allem von der letztgenannten Version einer Speisenzubereitungseinheit aus.

Ein Nachteil derartiger Speisenzubereitungseinheiten besteht jedoch darin, daß weder das Absauggebläse noch eine Filtereinheit unmittelbar dort angeordnet werden können, wo der Kochdunst entsteht (wobei der Begriff "Kochdunst" sämtliche bei Speisenzubereitungen entstehenden Ablüfte, insbesondere auch die Abluft, die beim Braten, Grillen und Fritieren entsteht, umfassen soll). Dies bedeutet, daß die oberhalb bzw. von der Oberfläche der Zubereitungseinrichtung abgesaugte Abluft zunächst über irgendwelche Kanäle geführt werden muß, bevor sie durch die Filtereinheit hindurchtreten und über das Sauggebläse ausgestoßen werden kann. Gleichzeitig entstehen beim Zubereiten von Speisen nahezu unvermeidlich Fett- und andere Flüssigkeitsspritzer, die in die Umgebung der Zubereitungseinrichtung und teilweise auch in die Absaugkanäle für die Abluft eindringen. Insbesondere wenn eine solche Speisenzubereitungseinheit für kommerzielle, nicht private Zwecke genutzt wird, erfordern es der Umfang der Benutzung und auch die gesetzlich vorgeschriebenen Hygienebestimmungen, daß derartige Vorrichtungen regelmäßig gründlich gereinigt werden.

Dies ist bei solchen Speisezubereitungseinheiten der in Rede stehenden Art ein sehr aufwendiger Vorgang, da die Abluftkanäle und deren Umgebung, einschließlich der Filtereinheit und deren Umgebung, oftmals nur sehr schlecht zugänglich sind, auch wenn die Filter selbst möglicherweise herausnehmbar sind.

Gegenüber dem oben diskutierten Stand der Technik liegt der vorliegenden Erfindung die Aufgabe zugrunde, eine Speisenzubereitungseinheit zu schaffen, welche besonders wartungs- und servicefreundlich, besonders einfach zu reinigen und vielseitig verwendbar ist.

Diese Aufgabe wird durch eine Speisenzubereitungseinheit mit den Merkmalen des Anspruchs 1 gelöst, wobei vorteilhafte Weiterbildungen sich aus den abhängigen Ansprüchen ergeben.

Wenn die Zubereitungseinrichtung, weiche notwendigerweise von oben her zugänglich sein muß und deshalb den oberen Teil des zugehörigen Gehäuses einnimmt, aus diesem Gehäuse herausgenommen ist, und wenn außerdem noch die Filtereinheit aus dem Gehäuse herausnehmbar ist, sind die innenflächen des Gehäuses einschließlich etwaiger Abluftkanäle in einfacher Weise zugänglich und können leicht und schnell gründlich gereinigt werden.

Zweckmäßigerweise ist das Gehäuse zum Beispiel oben offen, so daß die Zubereitungseinrichtung in vertikaler Richtung aus dem Gehäuse heraushebbar ist, vorzugsweise weist jedoch das Gehäuse eine (wahlweise verschließbare) frontseitige Öffnung auf, durch welche die Zubereitungseinrichtung nach Art eines Einschubs in horizontaler Richtung herausziehbar und auch wieder in das Gehäuse einschiebbar ist. In entsprechender Weise sollte auch die Filtereinheit in horizontal von der Vorderseite zur Rückseite des Gehäuses verlaufenden Führungen geführt sein, so daß sie ebenfalls durch eine entsprechende Öffnung bzw. Klappe in der Frontseite des Gehäuses leicht herausziehbar ist. Dabei ist eine Ausführungsform der Erfindung besonders bevorzugt, bei welcher die Filtereinheit aus mindestens einem, im wesentlichen plattenförmigen Filter besteht, der entweder in einer vertikalen Lage, zumindest aber in einer gegenüber der Horizontalen geneigten Lage in entsprechenden, horizontal venaufenden Führungen gelagert ist.

Die Filtereinheit ist unterhalb der Zubereitungseinrichtung angeordnet, und zwar derart, daß das gleichfalls unterhalb der Zubereitungseinrichtung angeordnete Sauggebläse die Abluft von der Zubereitungseinrichtung durch entsprechende Führungen absaugt und dann durch die Filtereinheit hindurchsaugt, woraufhin die Abluft durch das Sauggebläse hindurch nach außen befördert wird. Besonders bevorzugt ist dabei eine Ausgestaltung der Erfindung, bei welcher die Filtereinheit aus im wesentlichen zwei identischen Einheiten besteht, die beidseitig des Gebläses und jeweils zwischen dem Gebläse und der rechten bzw. linken Seitenwand des Gehäuses der Speisenzubereitungseinheit angeordnet sind. Vorzugsweise besteht die Flitereinheit aus mehreren im wesentlichen vertikal angeordneten Platten mit unterschiedlichen Filtereigenschaften, wobei zum Beispiel eine erste Platte aus einem Filtermaterial, wie zum Beispiel Vlies, bestehen kann, welches Wasserdampf und Feuchtigkeit abfängt, gefolgt von einer Platte aus Filtermaterial, welches die Funktion eines Fettfilters hat und schließlich können dahinter noch ein oder mehrere weitere Filterplatten geschaltet sein, die Aktivkohle als Filtermaterial enthalten und damit besonders geeignet sind, flüchtige und geruchbildende Stoffe aus der Abluft herauszufiltem. Bei einer solchen Ausgestaltung der Filtereinheit kann ein sehr hoher Reinigungsgrad der Kochdünste selbst beim Braten, Grillen und Fritieren erzielt werden, so daß die aus dem Sauggebläse austretende Abluft, wenn die Speisenzubereitungseinheit in einem im wesentlichen abgeschlossenen Raum verwendet wird, als Umluft in den Raum zurückgegeben werden kann und nicht notwendigerweise nach außen geführt zu werden braucht.

Um eine angemessene Abluftführung zu erreichen, ist zweckmäßigerweise zwischen der Zubereitungseinrichtung einerseits und dem darunter befindlichen Sauggebläse mit der Filtereinheit bzw. den Filtereinheiten andererseits ein Zwischenboden angeordnet, so daß der das Sauggebläse umgebende Raum oben und unten vom Boden des Gehäuses bzw. von dem Zwischenboden abgeschlossen wird, vorn und hinten von einer vorderen Klappe bzw. der Rückwand verschlossen ist und neben der Bodenöffnung für die Abluft nur noch seitlich und dort ausschließlich durch die Filterplatten hindurch zugänglich ist. Die seitlich in dem unteren so gebildeten Abteil des Gehäuses vertikal angeordneten Filterplatten haben eine relativ große Fläche, so daß die Abluft in effektiver Weise durch diese Filterplatten hindurchgesaugt und gereinigt werden kann.

Auch der Zwischenboden ist vorzugsweise leicht herausnehmbar in dem Gehäuse angeordnet und hat zumindest zu der rechten und linken Seitenwand vorzugsweise einen lichten Abstand, so daß ein Durchtritt für die von oben nach unten angesaugte Abluft zwischen Seitenwand und dem Rand des Zwischenbodens gebildet wird. In gleicher Weise hat auch die Zubereitungseinrichtung an ihrer Oberseite einen lichten Abstand zu den rechten und linken Seitenwänden, gegebenenfalls auch zur Rückwand des Gehäuses und, falls gewünscht, auch zur Vorderwand des Gehäuses, um so jeweils das Absaugen der oberhalb der Zubereitungseinrichtung entstehenden Abluft am Rand der Zubereitungseinrichtung und zwischen diesem Rand und den Seitenwänden bzw. Vorder- und Rückwänden zu ermöglichen.

Dagegen sollte der Zwischenboden mit Frontplatte(n) und Rückwand des Gehäuses dicht abschließen, damit nicht auch zwischen Frontplatte und Zwishenboden, bzw. zwischen Rückwand und Zwischenboden, Luft und Kochdunst ungefiltert von dem Sauggebläse angesaugt werden können. Zwar könnten auch zwischen Sauggebläse und derartigen vorderen oder hinteren Zugangskanälen Filter herausnehmbar angeordnet werden, jedoch ist dies weniger bevorzugt, da hierdurch die Speisenzubereitungseinheit komplizierter werden würde, während andererseits die großen seitlichen Filterquerschnitte sich als vollkommen ausreichend erwiesen haben. Die Absaugkanäle werden dann durch den Zwischenraum zwischen den inneren Wandflächen des Gehäuses und den Außenflächen der Zubereitungseinrichtung definiert, wobei die seitlichen Spalte zwischen Zwischenboden und Seitenwänden des Gehäuses den vorzugsweise einzigen Zugang für Abluft in den unteren Gehäuseraum bilden, in welchem die Filtereinheiten und das Sauggebläse angeordnet sind. Es versteht sich im übrigen, daß das Sauggebläse auch außerhalb des unteren Gehäuseraumes angeordnet und über einen Saugkanal oder -Schlauch mit diesem Raum verbunden werden könnte.

Dabei ist eine Ausführungsform besonders bevorzugt, bei welcher unmittelbar neben dem oberen Rand einer Zubereitungseinrichtung Absaugschlitze vorhanden sind, durch welche die Abluft oberhalb der Zubereitungseinrichtung abgesaugt wird. Diese Schlitze können zum Beispiel gebildet werden durch einen sogenannten Schwallschutz in Form einer länglichen Rinne mit einem von oben in die Rinne eingreifenden Blech, wobei die Abluft an dem Blech vorbei von oben in die Rinne eintreten und nach unten unter dem Rand des Bleches hindurch auf der anderen Seite aus der Abluftrinne wieder austreten kann. Solche Schwallschutzrinnen sind vorzugsweise im Rahmen eines entsprechenden Gehäuses angeordnet und haben dabei noch einen lichten Abstand zu den Seitenwänden bzw. zu Vorder- und Rückwand, um den. Hindurchtritt und Vorbeitritt von Abluft zu ermöglichen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figur.

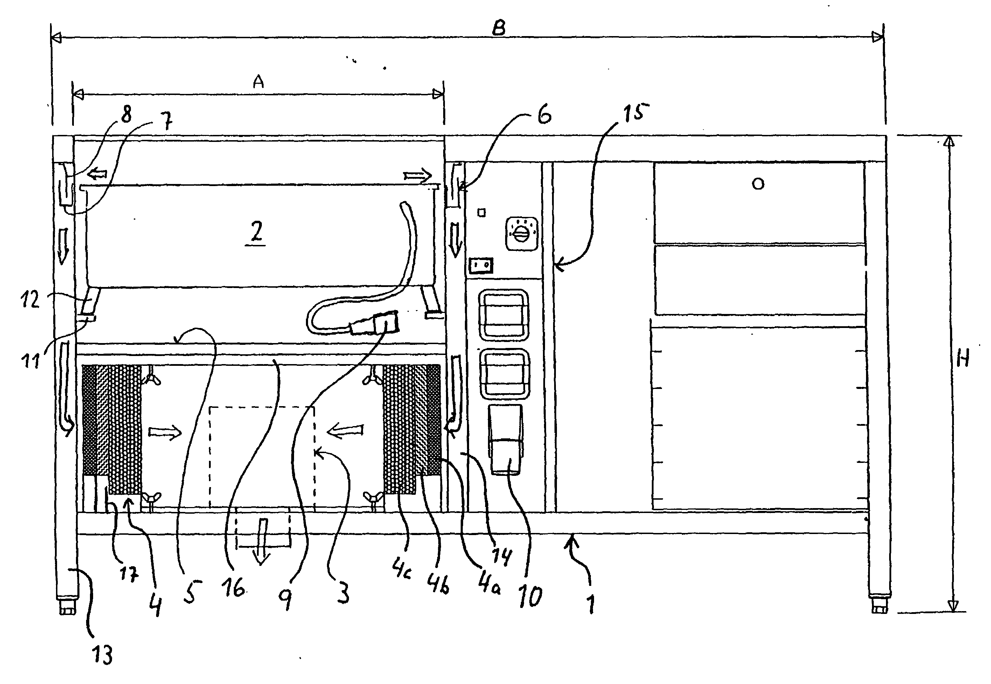

Die einzige Figur zeigt in einer Ansicht von vorn und ohne Frontplatte eine Speisenzubereitungseinheit gemäß der vorliegenden Erfindung, die in eine Zubereitungs- und Verkaufstheke integriert ist. Dabei wird die eigentliche Speisenzubereitungseinheit gemäß der vorliegenden Erfindung im wesentlichen durch die links in der Figur erkennbaren Elemente definiert, die durch den linken Rahmenpfosten 13 einerseits und den Zwischenpfosten 14 andererseits begrenzt werden. Die rechts davon angeordnete elektrische Versorgungseinheit 15 sowie die noch daneben angeordneten Schubfächer für eine Kassenschublade und dergleichen sind nicht der wesentliche Teil der vorliegenden Erfindung, lassen sich aber sinnvoll mit dieser kombinieren.

Die links erkennbare Zubereitungseinheit besteht im wesentlichen aus dem Gehäuse 1 bzw. dem linken Teil des Gehäuses 1, welches, wie bereits erwähnt, im wesentlichen durch die rechten und linken Pfosten 13 bzw. 14 begrenzt wird, einer Zubereitungseinrichtung 2, einem Sauggebläse 3, den rechts und links neben dem Sauggebläse 3 angeordneten Filtereinheiten 4 und einem Zwischenboden 5.

Das Gehäuse 1 besteht im wesentlichen aus einem Rahmen aus Rechteckrohren 13, 14, die miteinander verschweißt sind und die von außen her mit Platten verkleidet sind. Die Verkleidungsplatten einschließlich Rückwand und Bodenplatte sind in der Figur nicht erkennbar. Die Bodenplatte weist jedoch ein Loch für einen Abluftstutzen des Sauggebläses 3 auf. Wie bereits erwähnt, sind die Frontplatten, die separat für das untere Abteil unterhalb des Zwischenbodens 5 und für das obere Abteil oberhalb des Zwischenbodens 5 vorgesehen sind, in der Figur nicht dargestellt. Anstelle von zwei Frontplatten könnte selbstverständlich auch eine einzige durchgehende Frontplatte vorgesehen werden oder aber es könnte eine noch stärkere Aufteilung in mehrere Frontplatten vorgenommen werden, soweit dies zweckmäßig erscheint.

Am oberen Ende des lichten Raumes zwischen dem vorderen linken Pfosten 13 und einem entsprechenden hinteren linken Pfosten verläuft ein Schwallschutz 6 in Form einer Rinne 7 mit im wesentlichen U-förmigem Querschnitt, die sich praktisch über den gesamten lichten Abstand zwischen dem vorderen und dem hinteren linken Pfosten 13 erstreckt. Ein identischer Schwallschutz 6 befindet sich auch am oberen Ende des lichten Raumes zwischen dem vorderen Zwischenpfosten 14 und einem entsprechenden hinteren Pfosten bzw. der hinteren Rückwand. In die U-förmige Rinne 7 ragt von oben her noch ein Blechstreifen 8 hinein, der sich ebenfalls über die gesamte Länge der Rinne bzw. über den gesamten lichten Abstand zwischen den vorderen und hinteren Pfosten erstreckt und der jeweils an einem oberen Querträger, der die vorderen und hinteren Pfosten miteinander verbindet, dicht anliegt, zum Beispiel federnd angedrückt sein kann. Der Blechstreifen erstreckt sich nicht bis zum Boden der Rinne 7, so daß die Abluft zwischen der Innenkante der Rinne 7 und dem oberen Querträger hindurch in die Rinne 7 hinein, unten an der Kante des Bleches 8 vorbei und nach oben wieder aus der Rinne 7 austreten kann. Die Abluft strömt dann weiter nach unten abwärts und zwischen dem äußeren U-Schenkel der Rinne 7 und dem jeweiligen Seitenwandblech des Gehäuses 1 hindurch weiter nach unten an dem Zwischenboden 5 vorbei und schließlich durch die Filtereinheit 4 in das Gebläse und nach unten durch den Abluftstutzen hinaus. Der gesamte Abluftpfad ist in der Figur durch Doppelpfeile schematisch angedeutet.

Die Zubereitungseinrichtung 2 steht auf zwei seitlich an den Pfosten 13 bzw. 14 und den entsprechenden hinteren Pfosten angeschweißten Schienen 11, wenn die Frontplatte entfernt bzw. weggeklappt ist. Wie man sieht, könnte die Zubereitungseinrichtung 2 wahlweise auch nach oben aus dem Gehäuse 1 herausgehoben werden.

Wie man sieht, entspricht die Breite der Zubereitungseinrichtung 2 in etwa der lichten Weite des entsprechenden Gehäuseabteils, in welchem sie aufgenommen ist und hat nur ein geringes seitliches Spiel. Die Höhe der Zubereitungseinrichtung 2 bzw. die Länge ihrer Füße 12 und die Position der Auflageschienen 11 sind zweckmäßigerweise so auf die Gehäuseabmessungen abgestimmt, daß der obere Rand einer Zubereitungseinrichtung 2 in etwa mit dem oberen inneren Rand der Rinnen 7 des Schwallschutzes 6 abschließt. Es versteht sich, daß die Zubereitungseinrichtungen 2 austauschbare Module sind, so daß wahlweise Zubereitungseinrichtung fürs Kochen, Braten, Backen, Grillen, Frittieren etc. verwendet werden können. Außerdem können auch kombinierte Zubereitungseinrichtung 2 verwendet werden oder es können nebeneinander zwei getrennte Zubereitungseinrichtungen eingeschoben werden, wobei gegebenenfalls noch eine mittlere Stützschiene 11 vorgesehen werden kann. Die einzelnen Module sollten nach Möglichkeit jeweils in etwa dieselbe Höhe haben, so daß die Absaugschlitze sich jeweils in optimaler Höhe bezüglich der entstehenden Kochdünste befinden. Hierzu können einfach die Füße 12 der Zubereitungseinrichtung entsprechend angepaßt werden.

Die Zubereitungseinheit 2 weist ein elektrisches Anschlußkabel mit einem Stecker 9 auf, der in einen passenden Gegenstecker 10 der elektrischen Versorgungseinheit 15 eingesteckt werden kann. Dabei wird das Kabel durch eine passende Aussparung in der Frontplatte des Gehäuses 1 hindurchgeführt. Darüberhinaus kann die Zubereitungseinheit 2 selbstverständlich auch eigene elektrische Steuer- und Schalteinrichtungen aufweisen, die jedoch hier nicht dargestellt sind.

Der Zwischenboden 5, der das obere, die Zubereitungseinheit 2 aufnehmende Abteil des Gehäuses 1 von dem unteren Abteil trennt, in welchem die Filtereinheit und das Gebläse aufgenommen sind, ist mit Hilfe von Flügelmuttern oder anderen Schnellbefestigungseinrichtungen an einer Quertraverse 16 befestigt. Es versteht sich, daß auch andere Befestigungseinrichtungen verwendet werden können und daß der Zwischenboden zum Beispiel auch auf seitlichen Trägerschienen, ähnlich den Trägerschienen 11, aufliegen könnte. An der Quertraverse 16 sowie an dem nicht näher bezeichneten Boden des Gehäuses 1 sind außerdem noch Führungselemente 17 für die verschiedenen Filterplatten vorgesehen, die hier nur links unten in der Figur schematisch angedeutet sind. Es versteht sich, daß die Führungen 17 am unteren Boden des Gehäuses und am Zwischenboden 5 so dicht anliegen, daß kein nennenswerter Teil der Abluft an den Filtereinheiten 4 vorbeigesaugt werden kann. Vorzugsweise ist außerdem an bzw. zwischen den unteren Führungen 17 noch eine Fettauffangwanne vorgesehen, die sich in Längsrichtung vor allem unter den Filterplatten 4a und 4b erstreckt, die als Dampf- bzw. Fettfilter vorgesehen sind. In Strömungsrichtung hinter den Filterplatten 4a und 4b sind im vorliegenden Ausführungsbeispiel drei Filterplatten 4c mit Aktivkohlefiltern vorgesehen, die geruchbildende und andere flüchtige Stoffe auffangen und zurückhalten.

Die Höhe H des Gehäuses 1 entspricht einer üblichen Arbeitshöhe, wobei die Pfosten 13 des Gehäuses 1 wahlweise auch höhenverstellbar sein können. Die Lichte Breite A des linken Gehäuseteils, welches die erfindungsgemäßen Elemente aufnimmt, kann variieren und beträgt typischerweise zwischen 60 cm und 1 m, wobei Abweichungen von diesen Maßen selbstverständlich möglich sind. Die Gesamtbreite B des Gehäuses bzw. Rahmens 1 beträgt in dem vorliegenden Ausführungsbeispiel etwa 1,8 m.

Wie man erkennt, ist das Innere des Gehäuses in dem linken Teil, welcher die Speisenzubereitungseinheit gemäß der vorliegenden Erfindung definiert, in sehr einfacher Weise zugänglich, wenn sowohl die Zubereitungseinrichtung 2 als auch der Zwischenboden 5 als auch die Filter 4 nach vorn aus der Einrichtung herausgezogen worden sind. Der Benutzer hat dann im wesentlichen einen leeren, rechteckigen Kasten vor sich, in welchem lediglich am Boden noch das Sauggebläse 3 montiert ist, das aber bereits in einem relativ sauberen Raum angeordnet ist, da die Filtereinheiten 4 das Sauggebläse vor der verschmutzten Abluft schützen. Auch die oben rechts und links dargestellten Schwallschutzrinnen 6 sind vorzugsweise leicht herausnehmbar zwischen den vorderen und hinteren Pfosten eingehängt, ebenso wie Fettauffangrinnen, die unter den Filterplatten 4a, 4b eingeschoben sind.

## Patentansprüche

1. Speisenzubereitungseinheit, bestehend aus einem Rahmen bzw. einem Gehäuse (1), mindestens einer Zubereitungseinrichtung (2) für das Zubereiten von Speisen, einer Absaugeinrichtung mit einer Vakuumquelle, wie z.B. einem Sauggebläse (3) und einer Filtereinheit (4), wobei die Vakuumquelle der Absaugeinrichtung unter der Zubereitungseinrichtung (2) in dem Gehäuse (1) angeordnet ist, **dadurch gekennzeichnet, daß** die Zubereitungseinrichtung (2) und die Filtereinheit (4) leicht herausnehmbar in dem Gehäuse (1) aufgenommen sind, indem das Gehäuse mindestens eine Zugangsöffnung derart aufweist, daß die Zubereitungseinrichtung vertikal und/oder nach Art eines Einschubes horizontal aus dem Gehäuse herausnehmbar bzw. in dieses einsetzbar ist, und daß die Filtereinheit (4) in horizontal verlaufenden Führungen geführt und von der Frontseite des Gehäuses aus den Führungen herausziehbar und in diese einschiebbar ist.

2. Speisenzubereitungseinheit nach Anspruch 1, **dadurch gekennzeichnet, daß** die Filtereinheit (4) aus mindestens einem im wesentlichen plattenförmigen Filter (4a, 4b, 4c) besteht, der in vertikaler oder mindestens gegenüber der Horizontalen geneigter Lage der Führung gehaltert ist.

3. Speisenzubereitungseinheit nach einem der Ansprüche 1 oder 2, **dadurch gekennzeichnet, daß** die Filtereinheit (4) und die Vakuumquelle, z.B. in Form des Absauggebläses (3), unterhalb eines Zwischenbodens (5) angeordnet sind, während die Zubereitungseinrichtung (2) oberhalb des Zwischenbodens angeordnet ist.

4. Speisenzubereitungseinheit nach einem der Ansprüche 1 bis 3, **dadurch gekennzeichnet, daß** die Zubereitungseinrichtung (2) und der Zwischenboden (5) mindestens zu einer der Seitenwände oder der Rückwand einen lichten Abstand für das Hindurchströmen von Abluft haben.

5. Speisenzubereitungseinheit nach einem der Ansprüche 3 oder 4, **dadurch gekennzeichnet, daß** auch der Zwischenboden (5) herausnehmbar in dem Gehäuse angeordnet und vorzugsweise lösbar befestigt ist.

6. Speisenzubereitungseinheit nach einem der Ansprüche 1 bis 5, **dadurch gekennzeichnet, daß** der obere Rand der Zubereitungseinrichtung (2) unmittelbar unterhalb von Absaugschlitzen liegt, die im wesentlichen entlang der gesamten Tiefe der Zubereitungseinrichtung an den Seitenwänden des Gehäuses (1) bzw. an der Rückwand desselben gebildet werden.

7. Vorrichtung nach Anspruch 6, **dadurch gekennzeichnet, daß** der mindestens eine Absaugschlitz durch einen Schwallschutz (6) definiert wird, der die Form einer länglichen Rinne (7) mit einem in die Rinne hineinragenden, länglichen Blechsteg (8) hat.

8. Vorrichtung nach einem der Ansprüche 1 bis 7, **dadurch gekennzeichnet, daß** unterhalb der Filtereinheit eine Fettauffangwanne vorgesehen ist

9. Speisenzubereitungseinheit nach einem der Ansprüche 1 bis 8, **dadurch gekennzeichnet, daß** sie in einem fahrbaren Verkaufsstand untergebracht ist.

## Claims

1. A food preparation unit comprising a frame or a housing (1), at least one preparation device (2) for the preparation of food, a suction removal device having a vacuum source such as an extraction fan (3) and a filter unit (4), wherein the vacuum source of the suction removal device is arranged under the preparation device (2) in the housing (1), **characterised in that** the preparation device (2) and the filter unit (4) are easily removably accommodated in the housing (1) insofar as the housing has at least one access opening such that the preparation device can be removed from and inserted into the housing vertically and/or horizontally in the manner of a drawer, and that the filter unit (4) is guided in horizontally extending guides and can be pulled out of and pushed into the guides from the front side of the housing.

2. A food preparation unit according to claim 1 **characterised in that** the filter unit (4) comprises at least one substantially plate-shaped filter (4a, 4b, 4c) which is held in a position of the guide, which position is vertical or at least inclined with respect to the horizontal.

3. A food preparation unit according to one of claims 1 and 2 **characterised in that** the filter unit (4) and the vacuum source, for example in the form of the extraction fan (3), are arranged beneath an intermediate shelf (5) while the preparation device (2) is arranged above the intermediate shelf.

4. A food preparation unit according to one of claims 1 to 3 **characterised in that** the preparation device (2) and the intermediate shelf (5) involve an internal spacing at least in relation to one of the side walls or the rear wall, for exhaust air to flow therethrough.

5. A food preparation unit according to one of claims 3 and 4 **characterised in that** the intermediate shelf (5) is also arranged removably in the housing and is preferably releasably fixed therein.

6. A food preparation unit according to one of claims 1 to 5 **characterised in that** the upper edge of the preparation device (2) is disposed directly beneath suction removal slots which are formed substantially along the entire depth of the preparation device at the side walls of the housing (1) or at the rear wall thereof.

7. Apparatus according to claim 6 **characterised in that** the at least one suction removal slot is defined by an anti-surge means (6) which is in the form of an elongate channel (7) with an elongate metal plate (8) extending into the channel.

8. Apparatus according to one of claims 1 to 7 **characterised in that** a fat catch trough is provided beneath the filter unit.

9. A food preparation unit according to one of claims 1 to 8 **characterised in that** it is disposed in a mobile vending stall.

## Revendications

1. Unité de préparation de plats, se composant d'un cadre resp. d'un boîtier (1 ), d'au moins une unité de préparation (2) destinée à préparer des plats, d'un dispositif d'aspiration comportant une source de dépression, comme par exemple un ventilateur aspirant (3) et d'une unité de filtration (4), la source de dépression du dispositif d'aspiration étant agencée dans le boîtier (1) sous le dispositif de préparation (2), **caractérisée en ce que** le dispositif de préparation (2) et l'unité de filtration (4) sont reçus dans le boîtier (1 ) de façon à pouvoir en être aisément retirés en raison du fait que le boîtier comporte au moins une ouverture d'accès telle que le dispositif de préparation peut être retiré du boîtier, resp. inséré dans celui-ci, verticalement, et/ou horizontalement à la manière d'un dispositif enfichable, et l'unité de filtration (4) est guidée dans des guides s'étendant horizontalement et peut être retirée des guides, et insérée dans ceux-ci, depuis la face avant du boîtier.

2. Unité de préparation de plats selon la revendication 1, **caractérisée en ce que** l'unité de filtration (4) se compose d'au moins un filtre (4a, 4b, 4c), sensiblement en forme de plaque, qui est maintenu lorsque le guide est dans une position verticale ou au moins inclinée par rapport à l'horizontale.

3. Unité de préparation de plats selon l'une des revendications 1 ou 2, **caractérisée en ce que** l'unité de filtration (4) et la source de dépression, se présentant par exemple sous la forme du ventilateur aspirant (3), sont agencées sous un fond intermédiaire (5) tandis que le dispositif de préparation (2) est agencé au-dessus du fond intermédiaire.

4. Unité de préparation de plats selon l'une des revendications 1 ou 3, **caractérisée en ce que** le dispositif de préparation (2) et le fond intermédiaire (5) se trouvent à distance au moins de l'une des parois latérales ou de la paroi arrière afin de permettre le passage de l'air ventilé.

5. Unité de préparation de plats selon l'une des revendications 3 ou 4, **caractérisée en ce que** le fond intermédiaire (5) est également agencé, et avantageusement fixé de façon amovible, dans le boîtier de façon à pouvoir le retirer.

6. Unité de préparation de plats selon l'une des revendications 1 à 5, **caractérisée en ce que** le bord supérieur du dispositif de préparation (2) se trouve directement au-dessous de fentes d'aspiration qui sont ménagées sensiblement sur toute la profondeur du dispositif de préparation au niveau des parois latérales du boîtier (1 ) resp. de la paroi arrière de celui-ci.

7. Dispositif selon la revendication 6, **caractérisé en ce que** l'au moins une fente d'aspiration (6) est définie par un dispositif anti-projection qui a la forme d'une gouttière allongée (7) comportant une nervure en tôle (8) allongée en saillie de la goulotte.

8. Dispositif selon l'une des revendications 1 à 7, **caractérisé en ce qu'**une lèchefrite est prévue au-dessous de l'unité de filtration.

9. Unité de préparation de plats selon l'une des revendications 1 à 8, **caractérisée en ce qu'**elle est insérée dans un stand de vente mobile.
